# EUROPÄISCHE PATENTSCHRIFT

(11) **EP 1 433 033 B1**
(45) Veröffentlichungstag und Bekanntmachung des Hinweises auf die Patenterteilung: **13.02.2008**
(21) Anmeldenummer: 02772343.6
(22) Anmeldetag: 25.09.2002
(51) Int. Cl.: G05B 19/418

(54) **VERFAHREN ZUM BEDIENEN EINES FELDGERÄTES MITTELS BROWSER**
METHOD FOR OPERATING A FIELD DEVICE USING A BROWSER
PROCEDE D'UTILISATION D'UN APPAREIL DE TERRAIN AU MOYEN D'UN NAVIGATEUR

(30) Priorität: 27.09.2001 DE 10147706
(43) Veröffentlichungstag der Anmeldung: 30.06.2004
(73) Patentinhaber: Endress + Hauser GmbH + Co. KG, 79689 Maulburg (DE)
(72) Erfinder: SEGER, Andrea, 79650 Schopfheim (DE); GIEBEL, Joachim, 79650 Schopfheim (DE); LEFEBVRE, Martine, F-68730 Blotzheim (FR)
(74) Vertreter: Andres, Angelika Maria
(86) Internationale Anmeldenummer: PCT/EP2002/010717
(87) Internationale Veröffentlichungsnummer: WO 2003/029907

(56) Entgegenhaltungen:
- WO-A-00/77592
- US-A- 6 012 098

## Beschreibung

Die Erfindung bezieht sich auf ein Verfahren zum Bedienen eines Feldgerätes.

In der Automatisierungstechnik werden heute Feldgeräte eingesetzt, die zur Erfassung und/oder Beeinflussung von Prozeßvariablen dienen. Beispiele für derartige Feldgeräte sind Füllstandmeßgeräte, Massedurchflußmesser, Druckmesser, Temperaturmesser etc., die die entsprechenden Prozeßvariablen Füllstand, Massedurchfluß, Druck bzw. Temperatur erfassen.
Zur Beeinflussung von Prozeßvariablen dienen sogenannte Aktoren, die z.B. als Ventile den Durchfluß einer Flüssigkeit in ein Rohrleitungsabschnitt steuern.

Die Feldgeräte sind in der Regel über einen Datenbus mit einem Leit- bzw. Engineering System verbunden, das den gesamten Prozeßablauf steuert bzw. einen direkten Zugriff zum Bedienung, Parametrieren oder Konfigurieren auf die einzelnen Feldgeräte ermöglicht. Durch den direkten Zugriff können Einstellungen (z.B. Parameter) am Feldgerät geändert werden oder spezielle Diagnosefunktionen aufgerufen werden. Neben dem Zugriff über das Leitsystem ist auch ein zeitweiliger Zugriff, z.B. ein tragbares Handbediengerät (Handheld), tragbarer Rechner oder ein Handy möglich. Im Leitsystem werden die Messwerte der verschiedenen Prozeßvariablen ausgewertet bzw. überwacht und die entsprechenden Aktoren angesteuert.

Die Datenübertragung zwischen Feldgerät und Leitsystem erfolgt nach dem bekannten internationalen Standard für Feldbusse, wie z.B. Hart, Foundation Fieldbus, Profibus, CAN etc. Neben einer Kabelverbindung ist auch eine Funkverbindung zwischen Feldgerät und Leitsystem denkbar.

Vor der Inbetriebnahme müssen Einstellungen (Parametrierung) am Feldgerät selbst über eine Vorortbedienung oder über den Datenbus erfolgen. Für die Parametrierung über den Datenbus stellen die einzelnen Feldgeräte-Hersteller jeweils Bedien- bzw. Konfigurationtools zur Verfügung. Diese Programme sind Hersteller spezifischen und erlauben meist nur den Zugriff auf die Feldgeräte des jeweiligen Herstellers.
Bei heutigen Automatisierungsanlagen werden häufig eine Vielzahl von Feldgeräten unterschiedlicher Hersteller eingesetzt. Der Zugriff auf Fremdgeräte ist nur bedingt möglich.

Um die Bedienung verschiedener Feldgeräte von einem Leitsystem aus zu ermöglichen, muß dem Leitsystem die Funktionalität des Feldgerätes bekannt sein. Die Funktionalität eines Feldgerätes wurde bisher mittels einer Gerätebeschreibung beschrieben.
Hierfür stehen spezielle standardisierte Gerätebeschreibungssprachen zur Verfügung; Beispiele sind CAN - EDS (Control Aria Network - Electronic Data Sheet), Hart - DDL (Hart - Device Description Language), FF - DDL (Fieldbus Foundation - Device Description Language), Profibus - GSD (Profibus - Gerätestammdaten), Profibus - EDD (Profibus - Electronic Device Description). Bisherige Gerätebeschreibungen enthalten meist nur Informationen in Textform. Die Bedienung des Feldgerätes vom Leit- bzw. Engeneeringsystem aus erfolgt meist über eine grafische Bedienoberfläche, die die Inbetriebnahme, Wartung, Datensicherung, Problembehebung und Gerätedokumentation erleichtert. Die grafische Bedienoberfläche wird in der Regel vom Systemhersteller generiert. Nachteilig hierbei ist, daß die Gerätebeschreibung und das Leitsystem mit seiner grafischen Bedienoberfläche von unterschiedlichen Hersteller geliefert wird und damit nicht aufeinander abgestimmt ist. Bei der Programmierung eines Leit- bzw. Engeneeringsystems können keine Feldgeräte-Hersteller spezifischen Eigenschaften berücksichtigt werden.
Ein weiterer Nachteil der bekannten Gerätebeschreibungen liegt darin, daß spezielle Funktionen eines Feldgerätes wie z.B. die Darstellung einer Echo-Kurve eines Radar-Füllstandsmessgeräts nicht dargestellt werden können. Liegen die Gerätebeschreibungen in Maschinensprache (Binärcode) vor und werden in Systemanwendungen integriert, so ist nicht auszuschließen, daß dies zu Fehlern bei der Programmausführung führt. Solche Fehler können im Extremfall zu einem Systemabsturz führen.

Einige Gerätebeschreibungen können zwar in verteilten Systemen mittels DCOM-Technik eingesetzt werden, aber hier ist man auf Plattformen, die Microsoft-DCOM unterstützen, eingeschränkt. Plattformunabhängigkeit ist bei den bekannten Gerätebeschreibungen nicht gegeben.

Es ist weiterhin bekannt, daß die Erstellung von Gerätebeschreibungen mit herkömmlichen Mitteln sehr aufwendig ist. Es gibt z.B. keine Möglichkeit der Validierung bzw. Syntaxprüfung bei ihrer der Erstellung.
Aus der WO 00/77592 ist ein Verfahren zum Bedienen eines Feldgerätes mittels eines Browsers bekannt. Aus der US 6,012,098 ist ein Verfahren bekannt, bei dem Dateien für Browser getrennt als Datenkomponente in Form einer XML-Datei und als Darstellungskomponente in Form einer XSL-Datei vorliegen. Beide Komponenten werden zu einer HTML-Seite verbunden und in den Browser geladen.

Aufgabe der Erfindung ist es deshalb, ein Verfahren zum Bedienen eines Feldgerätes anzugeben, das die oben genannten Nachteile nicht aufweist, das insbesondere eine grafische Bedienoberfläche für die Bedienung eines Feldgerätes zur Verfügung stellt, die auf das Feldgerät angepaßt ist.

Gelöst wird diese Aufgabe durch ein Verfahren zum Bedienen eines Feldgerätes der Automatiserungstechnik nach Anspruch 1. Dadurch das die Datenkomponente und die Darstellungskomponente zusammen als Gerätebeschreibungsdatei erstellt werden, kann die Darstellungskomponente exakt an Funktionalität des Feldgerätes angepaßt werden.

Vorteilhafte Weiterentwicklungen der Erfindung sind in den Unteransprüchen beschrieben.

In einer Weiterentwicklung der Erfindung sind die Datenkomponente der Gerätebeschreibung als XML-Datei und die Darstellungskomponente als XSL-Datei beschrieben, die zur Laufzeit als HTML-Seite in einem Browser geladen werden.
In XML (eXtensible Markup Language) lassen sich stukturierte Daten einfach und plattformunabhängig darstellen. XSL (eXtensible Style Language) übernimmt die Darstellung von Daten aus XML-Dateien.

In vorteilhafter Weise ist die Laufzeitumgebung in eine Microsoft-Plattform.

In einer Weiterentwicklung der Erfindung umfaßt die Darstellungskomponente Bilder der betreffenden Prozeßkomponente einschließlich des Feldgeräts.

In einer weiteren Entwicklung der Erfindung ist die Darstellungskomponente durch gesprochenen Text hinterlegt.

In einer weiteren Weiterentwicklung der Erfindung sind auf der grafischen Bedienoberfläche Links vorgesehen, die eine Online-Hilfe aufrufen.

Nachfolgend ist die Erfindung anhand eines in der Zeichnung dargestellten Ausführungsbeispiels näher erläutert.

Es zeigen
Fig. 1: Automatisierungsanlage mit mehreren Feldgeräten
Fig. 2: Schematisches Ablaufdiagramm zur Erzeugung einer Gerätebeschreibung mit entsprechender HTML-Seite
Fig. 3: Graphische Bedienoberfläche

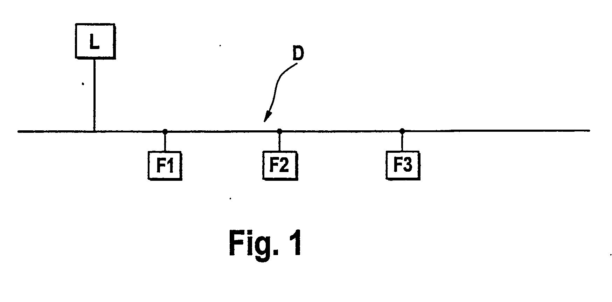

Die in Figur 1 dargestellte Automatisierungsanlage zeigt ein Leitsystem L, das über einen Datenbus D mit mehreren Feldgeräten F1, F2 und F3 verbunden ist. Bei den Feldgeräten F1 bis F3 kann es sich z.B. um einen Druckmesser, Temperaturmesser oder Durchflussmesser handeln. Das Leitsystem L kommuniziert über Datenbus D mit dem jeweiligen Feldgerät z.B. F1. So können Daten zwischen dem Feldgerät F1 und dem Leitsystem übertragen werden. Die Datenkommunikation auf dem Feldbus erfolgt nach den entsprechenden internationalen Standards wie z.B. Profibus, CAN oder FF. Die Bedienung des Feldgeräts, d.h. Inbetriebnahme, Wartung, Datensicherung, Problembehebung und Gerätedokumentation erfolgt über eine grafische Bedienoberfläche vom Leitsystem aus.

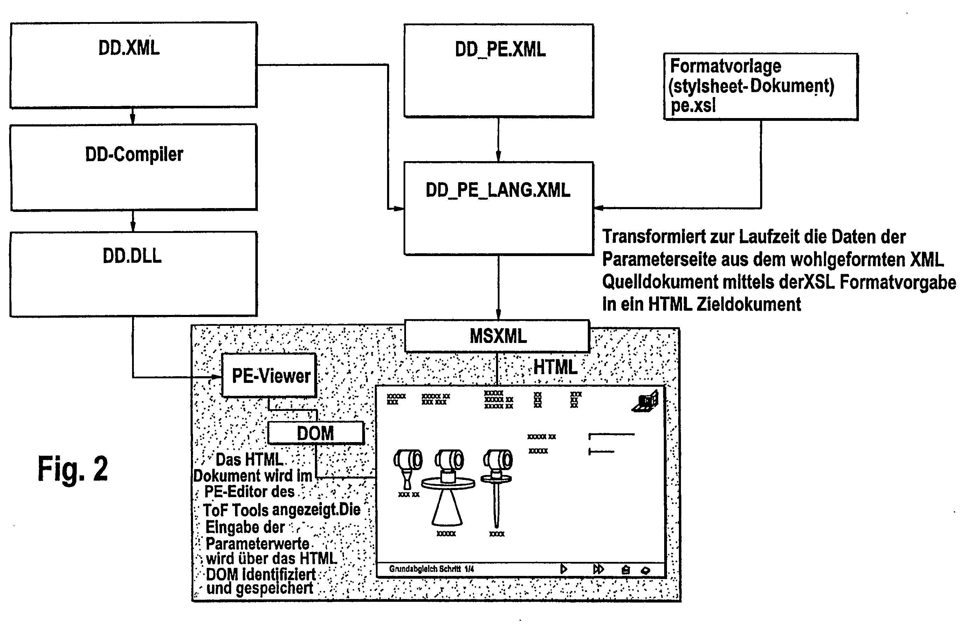

In Figur 2 ist schematisch ein Ablaufdiagramm zur Erzeugung einer erfindungsgemäßen Gerätebeschreibung dargestellt. Die Datei DD.XML enthält die Parameterbeschreibung (Label, Typ usw.) für ein Feldgerät z.B. F1, F2 oder F3. Ein DD-Compiler erzeugt aus der in Textform vorliegenden Beschreibung in XML eine Gerätebeschreibungsdatei DD.DLL (Dynamic Link Library).

Eine Datei DD_PE.XML beschreibt das Menü, die Seitenfolgen, die Anzahl der Parameter, Grafiken, Bilder usw. aus der zusammen mit der Datei DD.XML eine Datei DD_PE_Lang.XML erzeugt wird.
Diese Datei bildet die Datenkomponente.

In einer Datei pe.xsl, die die Darstellungskomponente bildet, sind die Formatvorlagen (style sheets) abgespeichert.

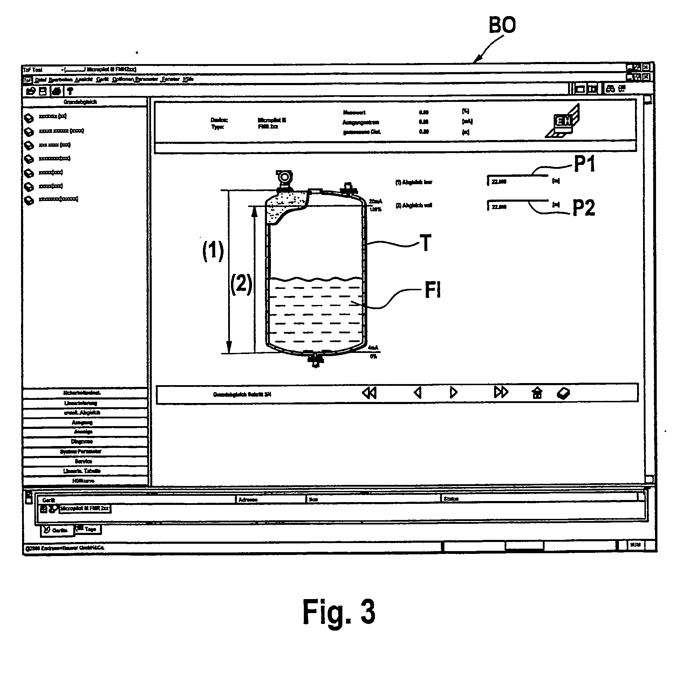

Gemäß dem erfindungsgemäßen Verfahren wird zur Laufzeit mittels eines entsprechenden Browsers (Internet Explorer, Netscape) dynamisch aus dem XML Dokument (Datenkomponente) und der XSL Formatvorgabe (Darstellungskomponente) eine HTML Seite erzeugt, die eine graphische Bedienoberfläche BO darstellt (Fig.3).
Die Bedienoberfläche BO zeigt zur Veranschaulichung und zur Erleichterung der Bedienung des Feldgerätes die Prozeßkomponenete mit Feldgerät. Im wesentlichen ist dargestellt ein Tank T gefüllt mit einer Flüssigkeit FI, einem Feldgerät F1 und die für den Abgleich notwendige Eingabemaske für zwei Parameterwerte P1, P2 des Feldgerätes F1 (z.B. Radar-Füllstandsmessgerät). Die beiden Parameter P1 und P2 sind grafische auf der Bedienoberfläche BO erläutert. Somit ist die Bedeutung der beiden Parameter P1 und P2 für den Anwender eindeutig klar. Dadurch werden Fehler bei der Parametrierung vermieden. Solche Fehler können sich negativ auf die Prozeßsicherheit auswirken.
Neben der grafischen Erläuterung ist auch eine sprachliche Erläuterung möglich. Dadurch kann der Anwender noch besser bei der Bedienung geführt werden.
Falls dem Anwender trotz der grafischen bzw. sprachlichen Erläuterung, die Bedeutung des/der Parameter P1 oder P2 unklar sein sollte, kann er durch anklicken des entsprechenden Textes "Abgleich leer" (Parameter P1) oder "Abgleich voll" (Parameter P2) eine Online/Oftline-Hilfe aufrufen, um sich die Begriffe zusätzlich erklären zu lassen.
Bei der Laufzeitumgebung handelt es sich vorzugsweise um eine Microsoft-Plattform.
Neben den Parametemamen kann die Datenkomponente auch Ereignis- und Alarmtexte sowie kodierte Zusatzinformationen enthalten.

Mittels eines Parameter-Editiors können entsprechend dem DOM-Standard (Document Object Model) die Parameterwerte (P1, P2), die über die HTML-Seite eingegeben, identifiziert und abgespeichert werden.

Ein wesentlicher Vorteil bei der Erstellung einer Gerätebeschreibung in XML besteht darin, daß sich XML einfach generieren läßt. Weiterhin besteht die Möglichkeit bei Gerätebeschreibungen in XML, die Syntax dieser Gerätebeschreibung zu überprüfen. Dadurch wird die Qualität der Gerätebeschreibungen erheblich verbessert.

XML wird darüber hinaus von verschiedenen Betriebssystemen unterstützt. Durch die Verwendung des XSL-Style-Sheet kann die grafische Bedienoberfläche exakt dem Feldgerät angepaßt werden, was die Inbetriebnahme, die Wartung, die Simulation, die Datensicherung, die Problembehebung, die Gerätedokumentation etc. eines Feldgerätes erheblich vereinfacht.

## Patentansprüche

1. Verfahren zum Bedienen eines Feldgerätes der Automatisierungstechnik, das über einen Datenbus D mit einem Leitsystem L verbunden ist, mittels einer graphischen Bedienoberfläche und einer Gerätebeschreibungsdatei für das Feldgerät (F1, F2, F3)
**DADURCH GEKENNZEICHNET;**
**dass** die Gerätebeschreibungsdatei zwei Komponenten, eine Datenkomponente und eine Darstellungskomponente umfasst, die dynamisch zur Laufzeit zusammen als graphische Bedienoberfläche in einem Browser geladen werden und die Änderung eines in der Datenkomponente beschriebenen Parameters direkt durch eine Eingabe an der graphischen Bedienoberfläche erfolgt

2. Verfahren nach Anspruch 1, **dadurch gekennzeichnet, daß** die Datenkomponente eine XML- Datei und die Darstellungskomponente eine XSL-Datei ist.

3. Verfahren nach Anspruch 1 oder 2, **dadurch gekennzeichnet, daß** die Laufzeitumgebung eine Microsoft-Plattform ist.

4. Verfahren nach einem der vorhergehenden Ansprüche, **dadurch gekennzeichnet,**
**daß** die Datenkomponente Parametemamen, Ereignis- und Alarmtexte, kodierte Zusatzinformationen etc. enthält.

5. Verfahren nach einem der vorhergehenden Ansprüche, **dadurch gekennzeichnet,**
**daß** die Darstellungskomponente Informationen zur Visualisierung und Erläuterung der betreffenden Prozeßkomponente enthält.

6. Verfahren nach einem der vorhergehenden Ansprüche, **dadurch gekennzeichnet,**
**daß** auf der graphischen Bedienoberfläche dynamische sich anpassende Links vorgesehen sind, die eine online/offline Hilfe aufrufen.

7. Verfahren nach einem der vorhergehenden Ansprüche, **dadurch gekennzeichnet,**
**daß** die Bedienung Inbetriebnahme, Wartung, Simulation, Datensicherung, Problembehebung und Gerätedokumentation umfaßt.

8. Verfahren nach einem der vorhergehenden Ansprüche, **dadurch gekennzeichnet,**
**daß** als Browser der Internet Explorer von Microsoft® verwendet wird.

9. Verfahren nach einem der vorhergehenden Ansprüche, **dadurch gekennzeichnet,**
**daß** als Browser der Netscape Navigator von Netscape verwendet wird.

## Claims

1. A method for operating an automation technology field device, which is connected by way of a data bus D to a control system L, by means of a graphic operator interface and a device description file for the field device (F1, F2, F3),
**CHARACTERISED**
**in that** the device description file comprises two components, a data component and a display component, which are loaded together dynamically at the run time as a graphic operator interface in a browser, and the change of a parameter described in the data component takes place directly by means of an input at the graphic operator interface.

2. A method according to Claim 1, **characterised in that** the data component is an XML-file and the display component is an XSL-file.

3. A method according to Claim 1 or 2, **characterised in that** the run time environment is a Microsoft platform.

4. A method according to one of the preceding claims, **characterised in that** the data component contains parameter names, event and alarm texts, coded additional information etc.

5. A method according to one of the preceding claims, **characterised in that** the display component contains information for visualising and explaining the relevant process component.

6. A method according to one of the preceding claims, **characterised in that** dynamic adaptive links are provided on the graphic operator interface which call up an online/offline help.

7. A method according to one of the preceding claims, **characterised in that** the operation comprises start-up, maintenance, simulation, data protection, problem-removal and device documentation.

8. A method according to one of the preceding claims, **characterised in that** Microsoft® Internet Explorer is used as the browser.

9. A method according to one of the preceding claims, **characterised in that** Netscape's Netscape Navigator is used as the browser.

## Revendications

1. Procédé destiné à l'utilisation d'un appareil de terrain de la technique d'automatisation, lequel est relié par l'intermédiaire d'un bus de données D avec un système numérique de contrôle commande L, au moyen d'une interface utilisateur graphique et d'un fichier de description d'appareil relatif à l'appareil de terrain (F1, F2, F3).
**CARACTÉRISÉ EN CE QUE**
le fichier de description d'appareil comprend deux composants, un composant de données et un composant d'affichage, qui sont chargés de façon dynamique pendant l'exécution en tant qu'interface utilisateur graphique dans un navigateur
et **en ce que** la modification d'un paramètre décrit dans le composant de données intervient directement par une entrée sur l'interface utilisateur graphique.

2. Procédé selon la revendication 1, **caractérisé en ce que** le composant de données est un fichier XML et que le composant d'affichage est un fichier XSL.

3. Procédé selon la revendication 1 ou 2, **caractérisé en ce que** l'environnement d'exécution est une plate-forme Microsoft.

4. Procédé selon l'une des revendications précédentes, **caractérisé en ce que** le composant de données contient des noms de paramètre, des textes d'événement et d'alarme, des informations supplémentaires codées, etc.

5. Procédé selon l'une des revendications précédentes, **caractérisé en ce que** le composant de données contient des informations pour la visualisation et l'explication du composant de process concerné.

6. Procédé selon l'une des revendications précédentes, **caractérisé en ce que** sont prévus sur l'interface utilisateur graphique des liens s'adaptant de façon dynamique, qui appellent une aide en ligne/hors ligne.

7. Procédé selon l'une des revendications précédentes, **caractérisé en ce que** l'utilisation comprend la mise en service, la maintenance, la simulation, l'enregistrement des données, l'élimination des problèmes, la documentation d'appareil

8. Procédé selon l'une des revendications précédentes, **caractérisé en ce qu'**est utilisé, en tant que navigateur, Internet Explorer de Microsoft®.

9. Procédé selon l'une des revendications précédentes, **caractérisé en ce qu'**est utilisé, en tant que navigateur, Netscape Navigator de Netscape.
